(19) Europäisches Patentamt
European Patent Office
Office européen des brevets

(11) Veröffentlichungsnummer: **0 193 121**
**A2**

(12) # EUROPÄISCHE PATENTANMELDUNG

(21) Anmeldenummer: 86102247.3

(22) Anmeldetag: 20.02.86

(51) Int. Cl.[4]: C 08 L 83/10
//C08G77/42, (C08L83/10, 51:04, 51:06, 57:00)

(30) Priorität: 26.02.85 DE 3506655
01.06.85 DE 3519690

(43) Veröffentlichungstag der Anmeldung:
03.09.86 Patentblatt 86/36

(84) Benannte Vertragsstaaten:
DE FR GB IT NL

(71) Anmelder: BAYER AG
Konzernverwaltung RP Patentabteilung
D-5090 Leverkusen 1 Bayerwerk(DE)

(72) Erfinder: Kress, Hans Jürgen, Dr.
Scheiblerstrasse 111
D-4150 Krefeld 1(DE)

(72) Erfinder: Paul, Winfried, Dr.
Bethelstrasse 22
D-4150 Krefeld 1(DE)

(72) Erfinder: Peters, Horst, Dr.
Winterberg 25
D-5090 Leverkusen 3(DE)

(72) Erfinder: Schoeps, Jochen, Dr.
Windmühlenstrasse 126
D-4150 Krefeld(DE)

(72) Erfinder: Ott, Karl-Heinz, Dr.
Paul-Klee-Strasse 54
D-5090 Leverkusen 1(DE)

(54) **Thermoplastische Formmassen auf Basis von Polysiloxan-Polycarbonat-Blockcopolymeren.**

(57) Gegenstand der vorliegenden Erfindung sind thermoplastische Formmassen, enthaltend

(A) 20 bis 80 Gew.-Teile eines Polydiorganosiloxan-Polycarbonate-Blockcopolymers,

(B) 70 bis 5 Gew.-Teile eines teilchenförmigen Pfropfpolymerisats und

(C) 5 bis 60 Gew.-Teile eines kautschukfreien, thermoplastischen Vinylpolymerisats,

wobei die Summe der Gew.-Teile der Komponenten (A) + (B) + (C) jeweils 100 Gew.-Teile beträgt, sowie gegebenenfalls weitere bekannte Zusätze.

BAYER AKTIENGESELLSCHAFT 5090 Leverkusen, Bayerwerk
Konzernverwaltung RP
Patentabteilung PS/by-c

Thermoplastische Formmassen auf Basis von Polysiloxan-Polycarbonat-Blockcopolymeren

Gegenstand der vorliegenden Erfindung sind thermoplastische Formmassen, enthaltend

(A) 20 bis 80 Gew.-Teile eines Polydiorganosiloxan-Polycarbonat-Blockcopolymers, mit mittleren Molekulargewichten $M_w$ von 10.000 bis 30.000, vorzugsweise von15.000 bis 25.000 ($M_w$ ermittelt in bekannter Weise durch Ultrazentrifugation oder Streulichtmessung) und mit einem Gehalt an Poly(diorganosiloxan)-Struktureinheiten zwischen 10 Gew.-% und 0,5 Gew.-%, vorzugsweise zwischen 7 Gew.-% und 1 Gew.-%, bezogen jeweils auf Gesamtgewicht des Blockcopolymeren, wobei die Blockcopolymeren, ausgehend von α,ω-Bishydroxyaryloxyendgruppen-haltigen Polydiorganosiloxanen mit einem Polymerisationsgrad $P_n$ zwischen 5 und 100 vorzugsweise zwischen 20 und 80 unter Mitverwendung von Kettenabbrechern hergestellt werden,

0193121

(B) 70 bis 5 Gew.-Teile eines teilchenförmigen Pfropfpolymerisats von ethylenisch ungesättigten Monomeren auf Kautschuke aus der Reihe der Dienmonomer-, Alkylacrylat- und EPDM-Kautschuke und

(C) 5 bis 60 Gew.-Teile eines kautschukfreien, thermoplastischen Vinylmonomerpolymerisats, wobei die Summe der Gew.-Teile der Komponenten (A) + (B) + (C) jeweils 100 Gew.-Teile beträgt, die

dadurch gekennzeichnet sind, daß die Komponente (A) unter Verwendung von Monoalkylphenolen oder Dialkylphenolen mit insgesamt 8 bis 20 C-Atomen in den Alkylsubstituenten, vorzugsweise von Phenolen der Formel (III)

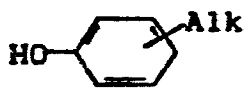
(III),

worin Alk einen linearen oder verzweigten Alkylrest mit 8-15 C-Atomen darstellt, als Kettenabbrecher nach dem Phasengrenzflächenverfahren hergestellt ist.

Die Polydiorganosiloxan-Polycarbonat-Blockcopolymeren gemäß Komponente (A) und deren Herstellung sind Gegenstand unserer deutschen Patentanmeldung P 3 506 472.2 (Le A 23 654), aus der die folgenden Ausführungen übernommen sind:

Gemäß deutscher Patentanmeldung P 3 506 472.2 (Le A 23 654) werden thermoplastische Poly(diorganosiloxan)-Polycarbonat-Blockcopolymere mit mittleren Molekulargewichten Mw (Gewichtsmittel) von etwa 10 000 bis 30 000, vorzugsweise von etwa 15 000 bis 25 000 (ermittelt in bekannter Weise durch Ultrazentrifugation oder Streulichtmessung) und mit einem Gehalt an Poly(diorganosiloxan)-Struktureinheiten zwischen 10 Gew.-% und 0.5 Gew.-%, vorzugsweise zwischen 7 Gew.-% und 1 Gew.-%, bezogen jeweils auf Gesamtgewicht des Blockcopolymeren, wobei die Poly(diorganosiloxan)-Strukturen einen Polymerisationsgrad zwischen 5 und 100, vorzugsweise zwischen 20 und 80 haben, aus

a) α,ω-Bis-hydroxyaryloxy-polydiorganosiloxanen mit Polymerisationsgraden zwischen 5 und 100, vorzugsweise zwischen 20 und 80, vorzugsweise solchen der Formel (I),

b) anderen Diphenolen, vorzugsweise der Formel (II),

c) Kettenabbrechern und gegebenenfalls

d) Verzweigern,

nach den bekannten Methoden des Zweiphasengrenzflächenverfahrens mit Phosgen hergestellt, wobei man als Kettenabbrecher Monoalkylphenole oder Di-alkylphenole mit insgesamt 8 bis 20 C-Atomen in den Alkylsubstituenten, vorzugsweise solche der Formel (III)

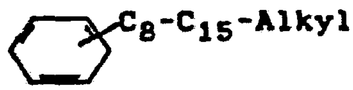

(III)

in ausreichenden Mengen, vorzugsweise in Mengen von 1,0 Mol-% bis 10 Mol-%, bezogen auf eingesetzte Diphenole der Komponente b), einsetzt, wobei quantitative Umsetzung der phenolischen Komponenten gegeben ist.

Gegenstand dieser deutschen Patentanmeldung P 3 506 472.2 (Le A 23 654) sind außerdem die nach diesem Verfahren erhältlichen Blockcopolymeren mit Monoalkylphenyl- oder Dialkylphenyl-Endgruppen.

Diese Produkte haben ein verbessertes Entformungs- und Fließverhalten und einen Zäh-Spröd-Übergang, der zu niederen Temperaturen verschoben ist.

Gemäß dieser deutschen Patentanmeldung P 3 506 472.2 (Le A 23 654) einzusetzende α,ω-Bishydroxy-aryloxy-polydiorganosiloxane gemäß Komponente a) sind z.B. aus US 3 419 634 bekannt.

Bevorzugt einzusetzende α,ω-Bis-hydroxy-aryloxyendgruppen-haltige Polydiorganosiloxane sind solche der Formel (I)

$$HO-Ar-O(-\underset{R}{\overset{R}{Si}}-O-)_o-(-\underset{R^1}{\overset{R}{Si}}-O-)_p-(-\underset{R^1}{\overset{R^1}{Si}}-O-)_q-Ar-OH \qquad (I)$$

worin

Ar gleiche oder verschiedene Arylenreste aus Diphenolen mit vorzugsweise 6 bis 30 C-Atomen sind und

R und $R^1$ gleich oder verschieden sind und lineares Alkyl, verzweigtes Alkyl, halogeniertes lineares Alkyl, halogeniertes verzweigtes Alkyl, Aryl oder halogeniertes Aryl, vorzugsweise aber Methyl bedeuten,

und

die Anzahl der Diorganosiloxy-Einheiten $n = o + p + q = 5$ bis 100, vorzugsweise 20 bis 80, ist.

Alkyl ist in vorstehender Formel (I) beispielsweise $C_1$-$C_{20}$-Alkyl; Aryl ist in vorstehender Formel (I) $C_6$-$C_{14}$-Aryl. Halogeniert bedeutet in vorstehender Formel I teilweise oder vollständig chloriert, bromiert

oder fluoriert. Beispiele für Alkyle, Aryle, halogenierte Alkyle und halogenierte Aryle sind Methyl, Ethyl, Propyl, n-Butyl, tert.-Butyl, Phenyl, Naphthyl, Chlormethyl und Trifluorpropyl.

Zur Herstellung der erfindungsgemäß einzusetzenden α,ω-Bis-hydroxy-aryloxypolydiorganosiloxane gemäß Komponente a), vorzugsweise der Formel (I), einzusetzende Diphenole sind:

Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-ether
Bis-(hydroxyphenyl)-sulfoxide
Bis-(hydroxyphenyl)-sulfone und
α,α-Bis-(hydroxyphenyl)-diisopropylbenzole

sowie deren kernalkylierte und kernhalogenierte Verbindungen. Diese und weitere geeignete aromatische Dihydroxyverbindungen sind z.B. in den US-Patentschriften 3 271 367 und 2 999 846 und in den deutschen Offenlegungsschriften 2 063 050 und 2 211 957 aufgeführt.

Vorzugsweise geeignete Diphenole zur Herstellung der α,ω-Bishydroxy-aryloxy-diorganosiloxane gemäß Komponente a) sind solche der Formel (II)

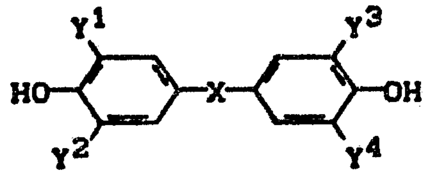

(II),

worin

X eine Einfachbindung, $-CH_2-$, 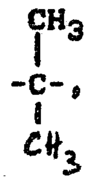 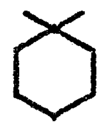 , O,S,$SO_2$

oder 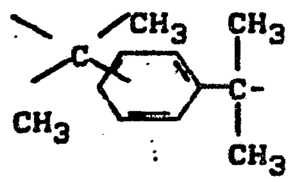 bedeuten und

$Y^1$ bis $Y^4$ gleich oder verschieden sind und Wasserstoff, $C_1$-$C_4$-Alkyl, vorzugsweise Methyl, oder Halogen, vorzugsweise Chlor oder Brom bedeuten.

Bevorzugte Diphenole sind beispielsweise

2,2-Bis-(4-hydroxyphenyl)-propan
1,1-Bis-(4-hydroxyphenyl)-cyclohexan
2,2-Bis-(3,5-dichlor-4-hydroxyphenyl)-propan
2,2-Bis-(3,5-dibrom-4-hydroxyphenyl)-propan

2,2-Bis-(3,5-dimethyl-4-hydroxyphenyl)-propan
Bis-(3,5-dimethyl-4-hydroxyphenyl)-methan und
Bis-(4-hydroxyphenyl)-sulfid.

Gemäß deutscher Patentanmeldung P 3 506 472.2 (Le A 23 654) einsetzbare andere Diphenole gemäß Komponente b) sind die vorstehend aufgeführten, wobei wiederum die bevorzugt genannten der Formel (II) entsprechen.

Gemäß deutscher Patentanmeldung P 3 506 472.2 (Le A 23 654) geeignete Monoalkylphenole bzw. Dialkylphenole könnenlineare Alkyl-Reste und verzweigte Alkyl-Reste enthalten. Beispiele für die erfindungsgemäß verwendbaren Kettenabbrecher gemäß Komponente c) sind p-Isooctylphenol, p-Nonylphenol, 3,5-Di-tert.-butylphenol p-tert.-Octylphenol, p-Dodecylphenol, 2-(3,5-Dimethyl- heptyl)-phenol und 4-(3,5-Dimethyl-heptyl)-phenol.

Anstelle der Monoalkylphenole bzw. Dialkylphenole können auch deren Halogenkohlensäureester eingesetzt werden.

Als Verzweiger gemäß Komponente d) sind solche mit drei oder mehr als drei funktionellen Gruppen, insbesondere solche mit drei oder mehr als drei phenolischen Hydroxylgruppen einsetzbar, wobei die üblicherweise bekannten Mengen an Verzweiger zwischen 0,05 und 2 Mol-%, bezogen auf Diphenole der Komponente b), einzuhalten sind. Die Herstellung verzweigter Polycarbonate ist beispielsweise in den DT-OS 1 570 533 und DT-OS 1 595 762 sowie in US-PS 3 544 514 beschrieben.

Einige der verwendbaren Verbindungen mit drei oder mehr als drei phenolischen Hydroxylgruppen sind beispielsweise 2,4-Bis-(4-hydroxyphenyl-isopropyl)-phenol, 2,6-bis-(2'hydroxy-5'-methyl-benzyl)-4-methylphenol, 2-(4-Hydroxyphenyl)-2-(2,4-dihydroxyphenyl)-propan und 1,4-Bis-(4,4'-dihydroxytriphenyl-methyl)-benzol. Einige der sonstigen trifunktionellen Verbindungen sind 2,4-Dihydroxybenzoesäure, Trimesinsäure, Cyanurchlorid und 3,3-Bis-(4-hydroxyphenyl)-2-oxo-2,3-dihydroindol sowie 3,3-Bis-(4-hydroxy-3-methyl-phenyl)-2-oxo-2,3-dihydroindol.

Die Zugabe der α,ω-Bis-hydroxyaryloxyendgruppen-haltigen Polydiorganosiloxane und der Kettenabbrecher im Zweiphasengrenzflächenverfahren kann zusammen mit den anderen Diphenolen gemäß Komponente b) vor der Phosgeneinleitung erfolgen oder separat während oder nach der Phosgeneinleitung, in jedem Fall aber vor der Zugabe des Polykondensationskatalysators.

Geeignete organische Lösungsmittel für das Zweiphasengrenzflächenverfahren sind die für die thermoplastischen Polycarbonate bekannten wie beispielsweise Methylenchlorid oder Chlorbenzol.

Geeignete basische Verbindungen für die Bildung der wäßrigen alkalischen Phase sind Lösungen von LiOH, NaOH, KOH, $Ca(OH)_2$ und/oder $Ba(OH)_2$ in Wasser.

Geeignete Katalysatoren für die Polykondensation nach dem Zweiphasengrenzflächenverfahren sind die für die

Polycarbonatsynthese bekannten tertiären aliphatischen Aminkatalysatoren wie Trimethylamin, Triethylamin, n-Tripropylamin, n-Tributylamin oder N-Ethylpiperidin; gegebenenfalls können auch die bekannten quartären Ammoniumsalze wie beispielsweise Tetrabutylammoniumbromid eingesetzt werden.

Die Menge an Katalysator für das Zweiphasengrenzflächenverfahren variiert je nach eingesetztem Diphenol zwischen 0,2 - 5 Mol-%, bei Einsatz von tetramethylsubstituierten Diphenolen zwischen 5 - 10 Mol-%, bezogen jeweils auf die Gesamtmenge an eingesetzten Diphenolen gemäß Komponente b).

Die Mengen an organischer Phase werden vorzugsweise so gewählt, daß die Zweiphasengrenzflächenpolykondensation mit 5 bis 20 %iger organischer Lösung, vorzugsweise 10 bis 15 %iger organischer Lösung durchgeführt wird.

Bei der Herstellung nach dem Zweiphasengrenzflächenverfahren sind die Mengen an wäßrig alkalischer Phase volumenmäßig vorzugsweise gleich der Menge der gesamten organischen Phase. Sie können volumenmäßig auch größer oder kleiner als die gesamten Mengen der organischen Phase sein.

Der pH-Wert der wäßrigen Phase liegt während der Reaktion zwischen pH 9 - 14, vorzugsweise zwischen pH 12 - 13.

Die jeweils einzusetzenden Reaktantenverhältnisse von anderem Diphenol gemäß Komponente b) zu Hydroxy-aryloxyterminiertem Polydiorganosiloxan gemäß Komponente a) richten sich nach dem zu erzielenden Gehalt an Poly-(diorganosiloxan)-Einheiten im erfindungsgemäß herzustellenden Blockcopolymeren, wobei normalerweise die quantitative Umsetzung der Reaktanten gegeben ist.

Als Carbonatspender für die Herstellung nach dem Zweiphasengrenzflächenverfahren dienen in bekannter Weise Kohlensäurehalogenide, insbesondere Kohlensäurechloride, wie beispielsweise Phosgen, $COBr_2$, oder die Bischlorkohlensäureester von Diphenolen in entsprechender Menge, wobei jeweils pro Halogen-Kohlensäure-Gruppe weniger als 1/2 Mol Diphenol verwendet wird.

Die Isolierung der aromatischen thermoplastischen Blockcopolymeren kann nach der von der Polycarbonatsynthese nach dem Zweiphasengrenzflächenverfahren her bekannten Methode erfolgen. Hierbei wird die organische, das Copolycarbonat gelöst enthaltende Phase abgetrennt, gewaschen und anschließend das Copolycarbonat durch Eindampfen der Lösung isoliert, wobei als Endstufe des Aufarbeitungsprozesses vorzugsweise ein Ausdampfextruder benutzt wird.

Den erhältlichen Blockcopolymeren können übliche Zusatzstoffe vor, während oder nach deren Herstellung zugegeben werden. Erwähnt seien in diesem Zusammenhang

beispielsweise Farbstoffe, Pigmente, Stabilisatoren gegen Feuchtigkeits-, Hitze- und UV-Einwirkung, Füllstoffe wie Glaspulver, Quarzerzeugnisse, Graphit, Molybdänsulfid, Metallpulver sowie Glasfasern.

Beispiel gemäß deutscher Patentanmeldung P 3 506 472.2 (Le A 23 654)

Die Bestimmung des Siloxangehaltes, d.h. des Anteils der Dimethylsiloxan-Einheiten in Gew.-%, bezogen auf das Gesamtgewicht des Blockcopolymeren, erfolgte durch Kernresonanzspektrometrie. Als mittlere Siloxanblocklänge wird der durch Bestimmung der Endgruppen am Ausgangsmaterial Polysiloxan ermittelte Polymerisationsgrad n angegeben.

Die relative Lösungsviskosität wurde bei 25° C und einer Konzentration von 5 g/l in Dichlormethan gemessen.

Die Izod-Kerbschlagzähigkeit wurde an Prüfkörpern von 3,2 mm bzw. 6,4 mm Breite in Anlehnung an ASTM 256-56 bestimmt.

Die Wärmeformbeständigkeit wurde nach Methode Vicat (VST/B/120) gemäß DIN 53 460/ISO 368 ermittelt.

Die Entformungskraft wurde auf einem Hülsenwerkzeug bestimmt.

1. Herstellung von Polydimethylsiloxan mit Bisphenol A-Endgruppen

In ein Gefäß, das mit Kühler, Thermometer, Tropftrichter und Rührer versehen ist, gibt man 19,2 Gew.-Teile Bisphenol A und 1800 Gew.-Teile Chlorbenzol. Es wird auf 100° C erwärmt und mit 11,6 Gew.-Teilen Kaliumcarbonat versetzt. Danach gibt man zu der Mischung unter Rückfluß über eine Zeit von 15 Minuten eine Lösung von 178 Gew.-Teilen α,ω-Bisacetoxypolydimethylsiloxan, $P_n$ = 84, in 178 Gew.-Teilen Chlorbenzol, wobei das Rühren für zwei weitere Stunden fortgesetzt wird. Es wird auf etwa 80° C abgekühlt und noch heiß filtriert.

2. Herstellung von Polydimethylsiloxan-Polycarbonat-Blockcopolymer

Die unter 1 beschriebene Lösung von Polydimethylsiloxan mit Bisphenol A-Endgruppen wird in einem Reaktionskolben, der mit Rührer, Phosgeneinlaßrohr, Rückflußkühler, Innenthermometer und Tropftrichter ausgerüstet ist, mit 3035 Gew.-Teilen Bisphenol A, 3024 Gew.-Teilen Natriumhydroxid, 34 700 Gew.-Teilen Wasser, 17 800 Gew.-Teilen Dichlormethan und 13 100 Gew.-Teilen Chlorbenzol und 164,7 Gew.-Teilen 4-(1,1,3,3-Tetramethylbutyl)-phenol versetzt. Bei Raumtemperatur werden 2216 Gew.-Teile Phosgen eingeleitet, wobei der pH durch Zugabe 45 %iger Natronlauge zwischen 12 und 13 gehalten wird. Das Einleiten nimmt ca. eine Stunde in Anspruch. Danach werden 11 Gew.-Teile Triethylamin zugesetzt und weitere 45 Minuten bei pH 12 bis 13 nachgerührt. Das Cokondensat wird nach für Polycarbonat gängigen Methoden aufgearbeitet.

0193121

| Eigenschaften | | Beispiel |
|---|---|---|
| rel. Lösungsviskosität | | 1.200 |
| Siloxangehalt (%) | | 5.3 |
| Siloxanblocklänge (n) | | 84 |
| Schmelzenviskosität bei $300^{\circ}C/10^{3}\ s^{-1}$ Pa.s | | 113 |
| Kerbschlagzähigkeit nach Izod (3.2 mm) | | |
| RT | J/m | 557* (*Zähbruch) |
| $-40^{\circ}C$ | J/m | 381* |
| krit. Temp. | °C | unter -40 |

0193121

| Eigenschaften | | Beispiel |
|---|---|---|
| Kerbschlagzähigkeit nach Izod (6.4 mm) | | |
| RT | J/m | 391* |
| $0^0$ C | J/m | 7x355*/3x320 |
| krit. Temp. | $^0$C | 0 |
| Wärmeformbeständigkeit Vicat (VST/B/120) | $^0$C | 141 |
| Entformungskraft bei 136$^0$C Formtemp./ 300$^0$C Massetemp. | bar | 5 |

Die Komponente (A) kann auch aus einer Mischung von Polydiorganosiloxan-Polycarbonat-Blockcopolymeren mit anderen, polysiloxanfreien, thermoplastischen Polycarbonaten bestehen, deren Gewichtsmittelmolekulargewichte $M_w$ jeweils wieder von 10.000 bis 30.000, vorzugsweise von 15.000 bis 25.000 ($M_w$ ermittelt in bekannter Weise durch Ultrazentrifugation oder Streulichtmessung) liegen, und wobei der Gehalt der Polycarbonatmischung von Polydiorganosiloxanstruktureinheiten wieder zwischen 10 Gew.-% und 0,5 Gew.-%, vorzugsweise zwischen 7 Gew.-% und 1 Gew.-%, bezogen jeweils auf Gesamtgewicht der Polycarbonatmischung, liegt, und wobei alle Polycarbonate der Mischung wiederum Monoalkylphenyl- oder Dialkylphenyl-Endgruppen mit insgesamt 8 bis 20 C-Atomen in den Alkylsubstituenten, vorzugsweise Monophenyl-Endgruppen der Formel (IIIa)

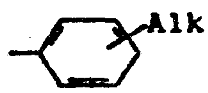

(IIIa),

worin Alk ein linearer oder verzweigter Alkylrest mit 8 bis 15 C-Atomen ist, haben.

Zur Herstellung derartiger Polycarbonatgemische sind auch solche Polydiorganosiloxan-Polycarbonat-Blockcopolymere geeignet, deren Gehalt an Poly(diorganosiloxan)-Struktureinheiten über 10 Gew.-%, vorzugsweise bei 40 Gew.-% bis 60 Gew.-% liegt, und deren $M_w$ zwischen 15.000 und 60.000 liegen kann.

Die Herstellung derartiger Polydiorganosiloxan-Polycarbonat-Blockcopolymerer erfolgt in Analogie zur Herstellung derjenigen Blockcopolymeren mit Gehalten von 10 Gew.-% bis 0,5 Gew.-% an Poly(diorganosiloxan)-Struktureinheiten gemäß unserer oben ausgeführten deutschen Patentanmeldung P 3 506 472.2 (Le A 23 654).

Pfropfpolymerisate (B) im Sinne der Erfindung sind solche, in denen auf einen Kautschuk entweder ein Monomer aus der Reihe Styrol, Methylmethacrylat oder eine Monomermischung von 95-50 Gew.-% Styrol, α-Methylstyrol, kernsubstituiertem Styrol, Methylmethacrylat oder Mischungen daraus und 5-50 Gew.-% Acrylnitril, Methylmethacrylat, Maleinsäureanhydrid, N- substituierte Maleinimide oder Mischungen daraus pfropfpolymerisiert sind. Geeignete Kautschuke sind insbesondere Polybutadien, Butadien/Styrol-Copolymerisate mit bis zu 30 Gew.-% einpolymerisiertem Styrol, Copolymerisate von Butadien und Acrylnitril mit bis zu 20 Gew.-% Acrylnitril oder Copolymerisate von Butadien mit bis zu 20 Gew.-% eines niederen Alkylesters von Acryl- oder Methacrylsäure (z.B. Methylacrylat, Ethylacrylat, Methylmethacrylat und Ethylmethacrylat).

Weitere geeignete Kautschuke sind z.B. Polyisopren oder Polychloropren. Geeignet sind weiterhin Alkylacrylatkautschuke auf der Basis von $C_1$-$C_8$-Alkylacrylaten, insbesondere Ethyl-, Butyl-, Ethylhexylacrylat. Diese Alkylacrylatkautschuke können gegebenenfalls bis zu 30 Gew.-% Monomere wie Vinylacetat, Acrylnitril, Styrol, Methylmethacrylat, Vinylether copolymerisiert enthalten.

Diese Alkylacrylatkautschuke können weiterhin kleinere Mengen (bis zu 5 Gew.-%) vernetzend wirkender ethylenisch ungesättiger Monomere enthalten. Solche sind z.B. Alkylendioldi(meth)-acrylate, Polyesterdi-(meth)-acrylate, Di-, Tri-vinylbenzol, Triallylcyanurat, Allyl-(meth)-acrylat, Butadien, Isopren etc. Solche Alkylacrylate sind bekannt. Acrylatkautschuke als Pfropfgrundlage könnenenn auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten. Andere geeignete Kautschuke sind z.B. EPDM-Kautschuke, also Kautschuke aus Ethylen, Propylen und einem unkonjugierten Dienmonomer.

Bevorzugt sind Dienmonomer- oder Alkylacrylatkautschuke.

Die Pfropfmischpolymerisate (B) enthalten 5 - 80 Gew.-%, insbesondere 20 - 70 Gew.-%, Kautschuk und 95 - 20 Gew.-%, insbesondere 80 bis 30 Gew.-%, pfropfcopolymerisierte Monomere. Die Kautschuke liegen in diesen Pfropfmischpolymerisaten in Form wenigstens partiell vernetzter Teilchen einer mittleren Teilchengröße von 0,09 bis 5 µm, insbesondere von 0,1 bis 1 µm, vor. Derartige Pfropfmischpolymerisate werden durch radikalische Pfropfcopolymerisation von Monomeren aus der Reihe Styrol, α-Methylstyrol, Acrylnitril, Methylmethacrylat,

kernsubstituiertes Styrol und Maleinsäureanhydrid in Gegenwart der zu pfropfenden Kautschuke hergestellt und sind durchweg bekannt. Bevorzugte Herstellungsverfahren für solche Pfropfmischpolymerisate sind die Emulsions-, Lösungs-, Masse- oder Suspensionspolymerisation.

Besonders bevorzugt sind sogenannte ABS-Polymerisate.

Die kautschukfreien Vinylmonomerpolymerisate (C) können aus den Pfropfmonomeren oder ähnlichen Monomeren aufgebaut sein, insbesondere aus wenigstens einem Monomeren aus der Reihe Styrol, α-Methylstyrol, Halogenstyrol, kernalkyliertes Styrol und einem Monomeren aus der Reihe Acrylnitril, Methacrylnitril, Methylmethacrylat, Maleinsäureanhydrid, Vinylacetat und N-substituiertes Maleinimid. Es handelt sich bevorzugt um Copolymerisate aus 95 - 50 Gew.-% Styrol, α-Methylstyrol, Methylmethacrylat oder Mischungen daraus mit 5 - 50 Gew.-% Acrylnitril, Methacrylnitril, Methylmethacrylat, Maleinsäureanhydrid, N-substituiertem Maleinimid oder Mischungen daraus.

Solche Copolymere entstehen häufig bei der Pfropfmischpolymerisation als Nebenprodukte, besonders dann, wenn große Mengen Monomere auf kleine Mengen Kautschuk gepfropft werden.

Die erfindungsgemäß einzusetzende Menge an Copolymerisat (C) von 5-60 Gew.-Tle., bezogen auf 100 Gew.-Tle. aus A) + B) + C), bezieht diese Nebenprodukte der Pfropfpolymerisation nicht mit ein.

Derartige getrennt hergestellte Copolymere sind harzartig, thermoplastisch und kautschukfrei; es sind insbesondere Copolymere aus Styrol und/oder α-Methylstyrol mit Acrylnitril, gegebenenfalls in Mischung mit Methylmethacrylat.

Besonders bevorzugte Copolymere bestehen aus 20 - 40 Gew.-% Acrylnitril und 80 - 60 Gew.-% Styrol oder α-Methylstyrol. Solche Copolymermassen sind bekannt und lassen sich insbesondere durch radikalische Polymerisationsprozesse, insbesondere durch Emulsions-, Suspensions-, Lösungs- oder Massepolymerisation herstellen. Die Copolymeren besitzen vorzugsweise Molekulargewichte von 15.000 bis $2 \cdot 10^5$.

Thermoplastische Mischungen aus Polycarbonat auf Basis aromatischer Dihydroxyverbindungen und ABS-Polymerisaten sind grundsätzlich bekannt (DE-PS 1 170 141 und DE-AS 1 810 993). Mischungen aus aromatischen Polycarbonaten mit speziellen ABS-Systemen werden in den DE-AS 2 259 565, DE-OS 2 329 548 und DE-OS 2 329 546 beschrieben.

An solche Mischungen werden sehr hohe technologische Anforderungen gestellt. Gefragt sind hierbei insbesondere hohe Zähigkeit, vor allem bei tiefen Temperaturen, möglichst hohe Wärmeformbeständigkeit. Für die Herstellung von komplizierten beziehungsweise sehr großen Formteilen ist obendrein eine möglichst gute Fließfähigkeit gewünscht. Mit den gemäß dem Stand der Technik bekannten

Polycarbonatformmassen läßt sich eine solche Eigenschaftskombination nicht erreichen, oder nur unter Verlust einzelner wichtiger Produkteigenschaften erreichen.

Es war daher überraschend, daß schon durch Einsatz eines modifizierten Polycarbonats dieses verbesserte Gesamteigenschaftsbild erreicht werden konnte. Gleichzeitig war es überraschend, daß durch Mischen des durch einen Diorganosiloxanblock modifizierten Polycarbonats mit ABS-Polymerisaten, trotz des Si-Blocks, Formmassen mit guten Eigenschaften erhalten wurden.

Der Zusatz von Organopolysiloxan-Polycarbonatpolymeren als schlagzähigkeitsverbessernde Komponente für Mischungen aus aromatischem Polycarbonat und einem Polystyrolharz ist gemäß DE-OS 2 434 085 bekannt, wobei die verwendeten Organopolysiloxan-Polycarbonatpolymere die der US 3 189 662 sind.

Organosiloxan-Polycarbonatpolymere gemäß US 3 189 662 unterscheiden sich von den erfindungsgemäßen Polydiorganosiloxan-Polycarbonat-Blockcopolymeren dadurch, daß sie hergestellt werden durch Phosgenierung bis zur maximalen Viskosität.

Von den literaturbekannten Polydiorganosiloxan-Polycarbonat-Blockcopolymeren werden in der einschlägigen Literatur ihre verbesserten mechanischen Eigenschaften bei tiefen Temperaturen beschrieben (z.B. B.M. Beach, R.P. Kambour und A.R. Schultz, J. Polym. Sci., Polym. Lett. Ed. 12, 247 (1974)).

Gegenstand der vorliegenden Erfindung sind thermoplastische Formmassen auf Basis von Organopolysiloxan-Polycarbonat-Blockcopolymeren in Kombination mit teilchenförmigen Pfropfpolymerisaten von ethylenisch ungesättigten Monomeren auf Kautschuken und kautschukfreien thermoplastischen Vinylpolymerisaten, die eine sehr hohe Fließfähigkeit bei gleichzeitig hoher Zähigkeit bei Schlagbeanspruchung (Kerbschlagzähigkeit), insbesondere auch bei tiefen Temperaturen sowie eine ausgezeichnete Wärmeformbeständigkeit besitzen.

Die erfindungsgemäßen Formmassen können weitere bekannte Zusätze wie Stabilisatoren, Pigmente, Flammschutzmitteln, Entformungsmittel und/oder Antistatika enthalten.

Die erfindungsgemäßen Formmassen, bestehend aus den Komponenten A), B), C), und gegebenenfalls weiteren bekannten Zusätzen wie Stabilisatoren, Pigmenten, Flammschutzmitteln, Entformungsmitteln und/oder Antistatika, werden hergestellt, indem man die jeweiligen Bestandteile in bekannter Weise vermischt und bei Temperaturen von 200°C bis 330°C in üblichen Aggregaten wie Innenknetern, Extrudern oder Doppelwellenschnecken schmelzcompoundiert oder schmelzextrudiert.

Gegenstand der vorliegenden Erfindung ist somit auch ein Verfahren zur Herstellung von thermoplastischen Formmassen bestehend aus den Komponenten A), B), C) und gegebenenfalls Stabilisatoren, Pigmenten, Flammschutzmitteln, Entformungsmitteln und/oder Antistatika, das dadurch gekennzeichnet ist, daß man die Komponenten A),

B), C) und gegebenenfalls Stabilisatoren, Pigmente, Flammschutzmittel, Entformungsmittel und/oder Antistatika nach erfolgter Vermischung bei Temperaturen von 200°C bis 330°C in gebräuchlichen Aggregaten schmelzcompoundiert oder schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art (z.B. für Haushaltsgeräte wie Saftpressen, Kaffeemaschinen, Mixer) oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

Eine weitere Form der Verarbeitung ist die Herstellung von Formkörpern durch Tiefziehen aus vorher hergestellten Platten oder Folien.

Teilchengröße bedeutet immer mittlerer Teilchendurchmesser $d_{50}$, ermittelt durch Ultrazentrifugenmessungen nach W. Scholtan et al., Kolloid -Z u.Z. Polymere 250 (1972) 782-796.

Die Bestimmung des Siloxangehaltes, d.h. des Anteils der Dimethylsiloxy-Einheiten in Gew.-%, bezogen auf das Gesamtgewicht des Blockcopolymeren, erfolgte gravimetrisch

und durch Kernresonanzspektrometrie. Als mittlere Siloxanblocklänge wird der durch Bestimmung der Endgruppen am Siloxan-Prepolymer ermittelte Polymerisationsgrad $P_n$ angegeben.

0193121

## Beispiele

**Eingesetzte Polykondensate und Polymerisate:**

A.1.) Copolycarbonat auf Basis von Bisphenol-A und 5 Gew.-% Polydimethylsiloxan der Blocklänge ($P_n$) 84, mit einer relativen Lösungsviskosität von 1,202, gemessen in $CH_2Cl_2$ bei 25° C und einer Konzentration von 0,5 Gew.-%, hergestellt unter Verwendung von Isooctylphenol als Kettenabbrecher, hergestellt gemäß deutscher Patentanmeldung P 3 506 472.2 (Le A 23 654) loc. cit.

A.2.) Copolycarbonat auf Basis von Bisphenol A und 5 Gew.-% Polydimethylsiloxan der Blocklänge ($P_n$) 84, mit einer relativen Lösungsviskosität von 1,246, gemessen in $CH_2Cl_2$ bei 25° C und einer Konzentration von 0,5 Gew.-%, hergestellt, unter Verwendung von Isooctylphenol als Kettenabbrecher, gemäß deutscher Patentanmeldung P 3 506 472.2 (Le A 23 654) loc. cit.

A.3.) Ein Copolycarbonat auf Basis von Bisphenol A und 5 Gew.-% Polydimethylsiloxan der Blocklänge ($P_n$) 40, mit einer relativen Lösungsviskosität von 1,31, gemessen in $CH_2Cl_2$ bei 25° C und einer Konzentration von 0,5 Gew.-%, hergestellt unter Verwendung von Phenol als Kettenabbrecher, hergestellt gemäß DE-OS 3 334 782 (Le A 22 594).

A.4.) Homopolycarbonat auf Basis von Bisphenol A mit einer relativen Lösungsviskosität von 1,20, gemessen in $CH_2Cl_2$ bei 25° C und einer Konzentration von 0,5 Gew.-%, hergestellt unter Verwendung von Isooctylphenol als Kettenabbrecher

A.5.) Homopolycarbonat auf Basis von Bisphenol A mit einer relativen Lösungsviskosität von 1,25, gemessen in $CH_2Cl_2$ bei 25° C und einer Konzentration von 0,5 Gew.-%, hergestellt unter Verwendung von Isooctylphenol als Kettenabbrecher

B.) SAN-Pfropfpolymerisat von 50 Gew.-% Styrol/Acrylnitril-Gemisch (in Gew.-Verhältnis von 72:28) auf 50 % teilchenförmigem Polybutadien einer mittleren Teilchengröße($d_{50}$) von 0,4 µm, erhalten durch Emulsionspolymerisation

C.) Styrol-Acrylnitril-Copolymerisat mit einem Styrol-Acrylnitril-Verhältnis von 72:28 und einer Grenzviskosität von [η] = 0,55 dl/g (Messung in Dimethylformamid bei 20° C).

Alle Proben enthalten 0,25 Gew.-Teile Pentaerythrittetrastearat bezogen auf 100 Gew.-Tl. der Summe aus A) + B) + C) als Entformungsmittel.

Die Herstellung der erfindungsgemäßen Formmassen bzw. der Vergleichsmaterialien erfolgte durch Schmelzcompoundierung in einem Innenkneter (Fassungsvermögen 1,3 l) bei einer Temperatur von 200-220° C.

Die Herstellung der Formkörper erfolgte durch Spritzguß bei 260° C.

Die Bestimmung der Wärmeformbeständigkeit nach Vicat (Methode B) erfolgte gemäß DIN 53 460.

Die Bestimmung der Kerbschlagzähigkeit nach Izod erfolgte an Stäben der Abmessung 2,5" x 1/2" x 1/8" gemäß ASTM-D-256.

Die Bestimmung der Fließfähigkeit erfolgte durch Spritzgießen einer Spirale von ca. 8 mm Breite und ca. 2 mm Stärke bei 260° C Massetemperatur. Die Spirallänge in cm stellt eine Größe für die Fließfähigkeit dar.

Die Beurteilung der Fließfähigkeit erfolgte weiterhin über den bei der Spritzgußmaschine (Massetemperatur: 260° C) notwendigen Fülldruck (s.: Johannaber, Kunststoffe 74 (1984), 1; S. 1-5) zur Herstellung von Stäben der Abmessung 2,5x1/2x1/8".

Die Zusammensetzung der Formmassen sowie die jeweiligen Prüfdaten zeigt die folgende Tabelle.

| | erfindungsgemäße Versuche | | | | Vergleichsversuche | | | | |
|---|---|---|---|---|---|---|---|---|---|
| A 1 (Gew.-Teile) | 60 | 60 | | | | | | | |
| A 2 " | | | 60 | 60 | | | | | |
| A 3 " | | | | | 60 | 60 | | | |
| A 4 " | | | | | | | 60 | | |
| A 5 " | | | | | | | | 60 | 60 |
| B " | 24 | 16 | 24 | 16 | 24 | 16 | 24 | 24 | 16 |
| C " | 16 | 24 | 16 | 24 | 16 | 24 | 16 | 16 | 24 |
| Kerbschlag-zähigkeit gemäß | | | | | | | | | |
| Izod bei RT (J/m) | 449 | 450 | 551 | 582 | 619 | 831 | 428 | 519 | 537 |
| " bei -20° C (J/m) | 362 | 338 | 488 | 467 | 602 | 781 | 234 | 462 | 329 |
| " bei -30° C (J/m) | 317 | 289 | - | 413 | - | 690 | - | 429 | - |
| " bei -40° C (J/m) | 204 | 148 | 388 | 298 | 490 | 272 | - | 252 | - |
| Wärmeformbeständigkeit gemäß Vicat -B (° C) | 116 | 117 | 118 | 117 | 119 | 119 | 120 | 122 | 120 |
| Fließfähigkeit | | | | | | | | | |
| a) Spirallänge (cm) | 49 | 53 | 41 | 41 | 38 | 44 | 48 | 40 | 46 |
| b) (Fülldruck 260° C) (bar) | 93 | 85 | 117 | 100 | 134 | 110 | 90 | 123 | 107 |

alle Proben enthalten 0,25 Gew.-Tl. Pentaerythrittetrastearat bezogen auf 100 Gew.-Tl. A.) + B.) + C.) als Entformungsmittel

0193121

Wie vorstehende Tabelle zeigt, werden durch Einsatz der erfindungsgemäßen Polysiloxan-Polycarbonat-Blockcopolymeren sehr hohe Fließfähigkeiten erreicht. Die erfindungsgemäßen Formmassen zeichnen sich obendrein gegenüber Produkten auf Basis von reinem Bisphenol-A-Polycarbonat durch wesentlich bessere Tieftemperaturzähigkeiten aus.

0193121

## Patentansprüche

1. Thermoplastische Formmassen enthaltend

(A) 20 bis 80 Gew.-Teile eines Poly(diorganosiloxan)-Polycarbonat-Blockcopolymers mit mittleren Molekulargewichten Mw von 10.000 bis 30.000 (ermittelt in bekannter Weise durch Ultrazentrifugation oder Streulichtmessung) und mit einem Gehalt an Poly(diorganolsiloxan)-Struktureinheiten zwischen 10 Gew.-% und 0,5 Gew.-%, bezogen jeweils auf Gesamtgewicht des Blockcopolymeren, wobei die Blockcopolymeren, ausgehend von α,ω-Bishydroxyaryloxyendgruppenhaltigen Polydiorganosiloxanen mit einem Polymerisationsgrad $P_n$ zwischen 5 und 100 unter Mitverwendung von Kettenabbrechern hergestellt werden,

(B) 70 bis 5 Gew.-Teile eines teilchenförmigen Pfropfpolymerisats von ethylenisch ungesättigten Monomeren auf Kautschuke aus der Reihe der Dienmonomeren-, Alkylacrylat- und EPDM-Kautschuke und

(C) 5 bis 60 Gew.-Teile eines kautschukfreien, thermoplastischen Vinylmonomerpolymerisats, wobei die Summe der Gew.-Teile der Komponenten (A) + (B) + (C) jeweils 100 Gew.-Teile beträgt,

dadurch gekennzeichnet, daß die Komponente (A) unter Verwendung von Monoalkylphenolen oder Dialkylphenolen mit insgesamt 8 bis 20 C-Atomen in den Alkylsubstituenten nach dem Phasengrenzflächenverfahren hergestellt ist.

2. Formmassen gemäß Anspruch 1, dadurch gekennzeichnet, daß die Komponente (A) unter Verwendung von Phenolen der Formel (III)

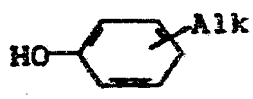

(III),

worin Alk einen linearen oder verzweigten Alkylrest mit 8 bis 15 C-Atomen darstellt, nach dem Phasengrenzflächenverfahren umsetzt.

3. Formmassen gemäß Ansprüche 1 und 2, dadurch gekennzeichnet, daß die Komponente (A) eine Mischung von Polydiorganosiloxan-Polycarbonat-Blockcopolymeren mit anderen, siloxanfreien thermoplastischen Polycarbonaten ist.

4. Formmassen gemäß Ansprüchen 1 bis 3, dadurch gekennzeichnet, daß sie mindestens einen Zusatzstoff, ausgewählt aus der Gruppe der Stabilisatoren, Pigmente, Flammschutzmittel, Entformungsmittel und Antistatika enthalten.

0193121

5. Verfahren zur Herstellung der Formmassen gemäß Ansprüche 1 bis 3, dadurch gekennzeichnet, daß man die Komponenten (A), (B) und (C) nach erfolgter Vermischung bei Temperaturen von 200° C bis 330° C in gebräuchlichen Aggregaten schmelzcompoundiert oder schmelzextrudiert.

6. Verfahren gemäß Anspruch 5 zur Herstellung der Formmassen gemäß Anspruch 3, dadurch gekennzeichnet, daß man mindestens einen Zusatz, ausgewählt aus der Gruppe der Stabilisatoren, Pigmente, Flammschutzmittel, Entformungsmittel und Antistatika einbezieht.